# EUROPÄISCHE PATENTANMELDUNG

(11) **EP 4 564 137 A1**
(43) Veröffentlichungstag der Anmeldung: **04.06.2025**
(21) Anmeldenummer: 24215712.1
(22) Anmeldetag: 27.11.2024
(51) Int. Cl.: G06F 3/01, G06F 3/14, G06V 30/224

(54) **VERFAHREN ZUR NUTZUNG EINES ERWEITERTEN REALITÄTSRAUMES UND EIN PHYSISCHER ANKER ZUR NUTZUNG EINES ERWEITERTEN REALITÄTSRAUMES**

(30) Priorität: 28.11.2023 DE 102023133135
(71) Anmelder: Aurich, Christopher, 42477 Radevormwald (DE)
(72) Erfinder: Aurich, Christopher, 42477 Radevormwald (DE)
(74) Vertreter: Ostriga Wirths und Vorwerk Patentanwälte PartGmbB

(57) **Zusammenfassung**

Beschrieben und dargestellt ist ein Verfahren zur Nutzung eines erweiterten Realitätsraumes mit den folgenden Schritten:
A) Erstellen einer Datenbank zur Generierung eines erweiterten Realitätsraumes mittels eines ersten Geräts,
B) Verknüpfung der Datenbank mit einem individuellen, digitalen Anker, wobei der Anker wenigstens einen Marker und / oder einen Identifikator aufweist,
C) Einfügen und Positionierung von einem vordefinierten Inhaltsraum in den erweiterten Realitätsraum,
D) Befüllen des Inhaltsraumes mit einem ersten Inhaltselement durch wenigstens einen ersten Inhaltsübermittler
sowie ein physischer Anker, dadurch gekennzeichnet, dass dieser portabel, stabil und / oder wiedererkennbar ist.

## Beschreibung

Die Erfindung betrifft ein Verfahren zur Nutzung eines erweiterten Realitätsraumes und einen physischen Anker zur Nutzung eines erweiterten Realitätsraumes.

Unter erweiterter Realität versteht man die computergestützte Erweiterung der Realitätswahrnehmung, was unteranderem durch die Ergänzung von Bildern oder Videos mit digitalen Informationen oder digitalen Objekten mittels Einblendung/Überlagerung in der realen Welt realisiert wird.

Damit die Abbildung der Realität in Echtzeit um digitale Informationen erweitert werden kann und so eine erweiterte Realitätsumgebung (engl. Augmented Reality, abgekürzt AR) entsteht, sind eine Vielzahl gleichzeitig ablaufender Vorgänge notwendig, welche bereits im Stand der Technik beschrieben sind.

Damit die Realität digital erweitert werden kann, muss diese ebenfalls digital abgebildet werden, weshalb die Darstellung eines Sichtfelds einer Kamera als ein wesentlicher Bestandteil zu nennen ist, welche direkt auf einem Display wiedergegeben wird. Beispielhaft sind hierbei Geräte wie Smartphones, Tablets oder auch Datenbrillen, sogenannte Smartglasses, zu nennen, welche die genannten Eigenschaften, nämlich eine Kamera, ein Display und die benötigte Peripherie zur Datenverarbeitung enthalten. Falls sich die Kamera bewegt oder sich die Gegebenheiten im Sichtfeld der Kamera ändern, wird dies auf dem Display durch eine Änderung der Darstellung angezeigt.

Weiterhin muss ein digitales Inhaltselement, wie z.B. Informationen oder Gegenstände, welches später angezeigt werden kann, vorhanden sein. Dieses Inhaltselement wird an einem Ort im Sichtfeld der Kamera platziert, wobei der Ort gespeichert wird und der Ort ergänzend an einen physischen Gegenstand im Sichtfeld der Kamera gebunden ist, weshalb der physische Gegenstand entsprechend seiner Funktion Anker genannt wird. Der physische Gegenstand muss, bevor der Ort des Inhaltselementes an diesen gebunden wird, genau abgescannt werden, jedoch umso größer und komplexer der Anker bzw. der den Anker darstellende physische Gegenstand ist, umso mehr Zeit wird auch für den Vorgang des Scannens benötigt, was den Prozess weiter verkompliziert und fehleranfällig macht.

Besonders bieten sich hierbei markante physische Gegenstände, welche aus ihrer Umgebung hervorstechen, an, wie Stühle oder Tische.

Um die Einbindung des digitalen Inhalts in die Realitätsumgebung möglichst realistisch zu gestalten, muss der genannte digitale Inhalt bzw. das Inhaltselement an den Blickwinkel und an die Entfernung zum vorher referenzierten physischen Gegenstand angepasst werden, wodurch der digitale Inhalt nicht als Fremdkörper in der eingangs genannten Darstellung des Sichtfeldes einer Kamera auffällt. Aus dem Stand der Technik ist beispielsweise die DE 10 2020 111 318 A1 der Firma Apple Inc. bekannt. Diese beschreibt unteranderem das Bestimmen des Blickwinkels und der Entfernung des Anzeigegerätes zu dem vorher referenzierten physischen Gegenstand.

Die Bandbreite möglicher Anwendungen eines erweiterten Realitätsraumes ist bereits vielfältig, beispielsweise sind hierbei unteranderem die Navigation, aber auch der Unterhaltungssektor und der Vermessungssektor zu nennen.

Zudem sind aus Museen erweiterte Realitätslösungen bereits bekannt, wobei meist die Ausstellungsstücke mit Informationen zu diesen unterlegt werden.

Jedoch ist ein interaktives Agieren mit dem digitalen Inhalt nicht vorgesehen. Dieser kann von dem Besucher nur gelesen werden, ein Hinzufügen von Informationen oder das Verknüpfen von Inhalten ist dem Besucher auf einfache Weise nicht möglich.

Nachteilig ist zu nennen, dass vielmehr jeder, der dabei neue Informationen hinzufügen möchte zumindest die Berechtigung dazu und des Weiteren auch dezidierte Programmierkenntnisse, genannt sollen hierbei Programmiersprachen, Programmstrukturen und Softwarekenntnisse werden, benötigt, um diesen Vorgang vorzunehmen.

Die Aufgabe der Erfindung besteht darin, ausgehend von dem dargelegten Stand der Technik, ein Verfahren zur Nutzung eines erweiterten Realitätsraumes zu schaffen, das eine bessere Bedienbarkeit ermöglicht. Außerdem soll eine einfache Interaktion mit den Inhaltselementen im erweiterten Realitätsraum von Jedermann gewährleistet werden.

Die Lösung der Aufgabe ergibt sich aus den Merkmalen des Anspruchs 1.
1. Verfahren zur Nutzung eines erweiterten Realitätsraumes mit den folgenden Schritten:
   A) Erstellen einer Datenbank zur Generierung eines erweiterten Realitätsraumes mittels eines ersten Geräts,
   B) Verknüpfung der Datenbank mit einem individuellen, digitalen Anker, wobei der Anker wenigstens einen Marker und / oder einen Identifikator aufweist,
   C) Einfügen und Positionierung von einem vordefinierten Inhaltsraum in den erweiterten Realitätsraum,
   D) Befüllen des Inhaltsraumes mit einem ersten Inhaltselement durch wenigstens einen ersten Inhaltsübermittler.

Das erfindungsgemäße Verfahren zur Nutzung eines erweiterten Realitätsraumes hat den wesentlichen Vorteil der besseren Bedienbarkeit, welche sich durch ein einfaches Erstellen und Bearbeiten des erweiterten Realitätsraumes auszeichnet.

Die Schritte des Verfahrens sind einfach gehalten und lassen sich automatisieren und generalisieren. So kann Schritt A), nämlich das Erstellen einer Datenbank zur Generierung eines erweiterten Realitätsraumes mittels eines ersten Geräts, mit einem Tastendruck auf diesem automatisch ausgeführt werden.

Der Tastendruck kann in einer App mit einer grafischen Oberfläche erfolgen, welche auf ein mobiles Gerät geladen wird, ohne dass eine komplizierte Entwicklungsumgebung, welche zumeist alphabetisch gesteuert wird und keine grafische Oberfläche aufweist, genutzt werden muss.

Das genannte mobile Gerät kann beispielsweise ein Smartphone sein, welches unter anderem ein Display, ein Kameramodul und ein Kommunikationsmodul aufweist, mit dem es mit Netzwerken verbunden werden kann. Auf diesem Gerät kann die angesprochen App direkt ausgeführt werden oder auch in einem Webbrowser (browserbasiert) als Webanwendung laufen. Denkbar sind auch Geräte wie Tablets oder Smartglasses.

Auch der Verfahrensschritt B) Verknüpfung der Datenbank mit einem individuellen, digitalen Anker, wobei der Anker wenigstens einen Marker und/oder einen Identifikator aufweist, wodurch es ermöglicht wird, dass andere Geräte mittels Identifizierung des Ankers auf die dazugehörige Datenbank zugreifen können, verbessert die Bedienbarkeit, da der Prozess automatisiert abläuft.

Ein Marker ist ein Bild oder ein Objekt, welches von einer AR-fähigen mobilen App erkannt und zum Auslösen von Augmented-Reality-Funktionen verwendet werden kann. Marker sollten auf flachen Oberflächen platziert werden, da unebene, unregelmäßige oder abgerundete Oberflächen die Bilder der Marker durch beispielsweise Knicken verformen, wodurch für Softwareprogramme der Marker nicht mehr lesbar ist oder der Marker nicht mehr als solcher erkannt wird.

Ebenfalls umfasst der Anker unteranderem als Bestandteil auch einen Identifikator, welcher auch abgekürzt als ID bezeichnet wird und als eindeutige Kennzeichnung dient, damit der Anker der korrekten Datenbank und somit dem korrekten erweiterten Realitätsraum zugeordnet werden kann.

Der Identifikator kann in verschiedenen Formen vorliegen, wobei als eine bereits standarisierte Form der Quick-Response Code (QR-Code) genannt werden muss. Dabei kann der Identifikator beispielsweise für sich allein als grafisches Muster stehen oder mit dem Marker und anderen weiteren Funktionen in einem grafischen Muster integriert sein.

Auch lässt sich durch die Prozessschritte C) Einfügen und Positionierung von einem vordefinierten Inhaltsraum in den erweiterten Realitätsraum und D) Befüllen des Inhaltsraumes mit einem ersten Inhaltselement durch wenigstens einen ersten Inhaltsübermittler die Bedienbarkeit weiter verbessern, da diese einzelnen Verfahrensschritte ebenfalls sehr gut automatisierbar sind.

Es ist zudem vorgesehen, dass in einem Schritt E) mittels des ersten Gerätes und/oder eines zweiten Geräts auf die Datenbank zugegriffen wird, wodurch die Datenbank für weitere Geräte zugänglich wird. Dadurch wird es ermöglicht, den digitalen Inhalt mit anderen Personen zu teilen, da nun der Inhalt der Datenbank auch auf anderen Geräten mit allen in der Datenbank gespeicherten Daten, wie beispielsweise Positionen, Größenverhältnisse und Weiteres, für die jeweiligen Geräte zugänglich ist.

Ergänzend ist es möglich, dass der Inhaltsraum mit einem zweiten Inhaltselement durch den ersten Inhaltsübermittler mittels des ersten Gerätes und/oder durch einen zweiten Inhaltsübermittler mittels einem zweiten Gerät befüllt wird.

Das zweite Inhaltselement stellt eine Interaktion des zweiten Inhaltsübermittlers mit dem Inhalt des ersten Inhaltsübermittlers dar. So kann zu einem Bild, dass der erste Inhaltsübermittler eingefügt hat, ein beispielsweise verbalisierter Kommentar oder ein weiteres Bild hinzugefügt werden. Möglich wäre beispielsweise die Kommentierung eines Produktes von einem Kunden oder Vorschläge für mögliche Events etc. an Orten in der Nähe.

Vorteilhaft ist zudem, dass der erste Inhaltsübermittler mittels des ersten Gerätes das erste und/oder zweite Inhaltselement lesen und/oder bearbeiten kann. Dadurch wird ermöglicht, dass die weiteren Inhaltselemente auch auf anderen Geräten als das, welches der Inhaltsübermittler für die Übermittlung seines Inhaltes genutzt hat, angezeigt werden können.

Angedacht ist weiterhin, dass das Lesen und/oder Befüllen und/oder Bearbeiten des Inhaltsraumes und/oder des Inhaltselementes berechtigungsabhängig ist. Dadurch kann das Bearbeiten von Inhalten nur für einen ausgewählten Kreis an Personen erlaubt werden, wodurch z. B. bei einem Messestand nur das dort arbeitende Personal Informationen hinzufügen kann. Auch ist es möglich, verschiedenen Inhalten verschiedene Berechtigungen zuzuordnen, wodurch manche Inhalte von der Allgemeinheit bearbeitet werden können, andere jedoch nur von einem ausgewählten Kreis an Personen.

Zudem ist vorgesehen, dass der Inhaltsraum geräteunabhängig unter Verwendung der Positionierung des Inhaltsraumes im erweiterten Realitätsraum dargestellt wird, wodurch einer Vielzahl von Nutzern mit verschiedenen Geräten die gleiche Darstellung geboten wird. Dies wird unteranderem durch den Verfahrensschritt B) Verknüpfung der Datenbank mit einem individuellen, digitalen Anker, wobei der Anker wenigstens einen Marker aufweist, unterstützt, da dadurch die verschiedenen Geräte auf die gleiche Datenbank zugreifen können.

Vorteilhaft ist zudem, dass der Anker mittels elektronischer Apparatur abgescannt werden kann. Dadurch kann der Einsatz des Ankers universeller erfolgen.

Auch soll aus dem Anker ein physischer Anker, insbesondere durch Druckverfahren oder Gravurverfahren, abgeleitet werden, da dieser nach dem Erstellen nur digital vorliegt und somit mittels eines digitalen Anzeigemediums für weitere Personen, welche auf die Datenbank zugreifen möchten, zugänglich gemacht werden muss, was durch das ableiten eines physischen Ankers auch ohne ein digitales Anzeigemedium möglich ist.

Ebenso wird die Aufgabe der Erfindung, eine bessere Bedienbarkeit zu ermöglichen und eine einfache Interaktion mit dem Inhalt zu gewährleisten, durch die kennzeichnenden Merkmale des Anspruchs 10 gelöst, wonach der physische Anker portabel, stabil und/oder wiedererkennbar ist.

Vorteilhaft ist, dass der Anker transportiert und am Ort der späteren Verwendung aufgestellt werden kann, was durch einen schnellen Auf- und Abbau realisiert werden kann.

Es ist vorgesehen, dass dieser aus einem Textil und/oder Papier besteht. Dadurch kann der Anker, zum Beispiel durch Falten, verkleinert und einfach gelagert werden, wodurch die Bedienbarkeit verbessert wird. Möglich ist auch, dass der Anker in einem Flugzeug, einem Zug oder einem Auto transportiert wird.

Zusätzlich ist angedacht, dass der physische Anker von einem Rahmen, insbesondere einem Aluminiumrahmen, wenigstens teilweise umgeben ist. Der im Vergleich zu einer Textil- oder Papierumrandung stabile Alumniumrahmen schützt den Anker vor Schäden durch äußere Einflüsse, wie zum Beispiel Verschleiß infolge der Benutzung und des wiederholten Auf- und Abbaus.

Ergänzend soll der physische Anker bedruckbar, wasserfest und/oder brandfest sein, was sich ebenfalls vorteilhaft auf die Bedienbarkeit und Lebensdauer des Ankers auswirkt.

Weiter ist es möglich, dass der physische Anker hinterrücks mit LEDs versehen ist, wodurch eine Vielzahl von Vorteilen entstehen, unteranderem wird die Sichtbarkeit des physischen Ankers verbessert, die Individualisierbarkeit wird gesteigert und der physische Anker kann situationsbedingt ausgebildet werden.

Es ist vorgesehen, dass der physische Anker als Aufsteller, insbesondere als Messeaufsteller, ausgebildet ist. An die genannten Messeaufsteller werden eine Vielzahl von Anforderungen gestellt, unteranderem sind Robustheit, einfache Handhabbarkeit und geringe Kosten zu nennen. Diese Anforderungen kann der erfindungsgemäße Anker vorteilhaft durch den Aluminiumrahmen und das Textilteil erfüllen, da so Robustheit und geringes Gewicht vereint werden.

Weitere Vorteile der Erfindung ergeben sich aus den nachfolgenden Beschreibungen mehrerer Ausführungsbeispiele. Es zeigen:
- Fig. 1: ein Blockdiagramm der technischen Abläufe von einer Erstellung eines Ankers bis zur Positionierung eines digitalen Inhaltes,
- Fig. 2: ein Flussdiagramm des erfindungsgemäßen Verfahrens zur Erstellung und Interaktion mit der erweiterten Realität,
- Fig. 3: einen erfindungsgemäßen Anker in Frontansicht,
- Fig. 4a: eine den Anker, insbesondere einen Quick-Response Code (QR-Code), mittels eines Mobiltelefons abscannende Person,
- Fig. 4b: eine den Anker, insbesondere den Marker, mittels eines Mobiltelefons abscannende Person,
- Fig. 4c: Verknüpfung von Marker und einem erweiterten Realitätsraum in dreidimensionaler Darstellung,
- Fig. 5a: eine den physischen Anker mittels eines Mobiltelefons abscannende ersten Person 1,
- Fig. 5b: Positionieren eines Objektes im virtuellen Raum durch die erste Person 1,
- Fig. 5c: Anzeigen des Objektes auf dem Mobiltelefon einer zweiten Person 2 und
- Fig. 5d: Hinzufügen weiterer Objekte durch die zweite Person 2.

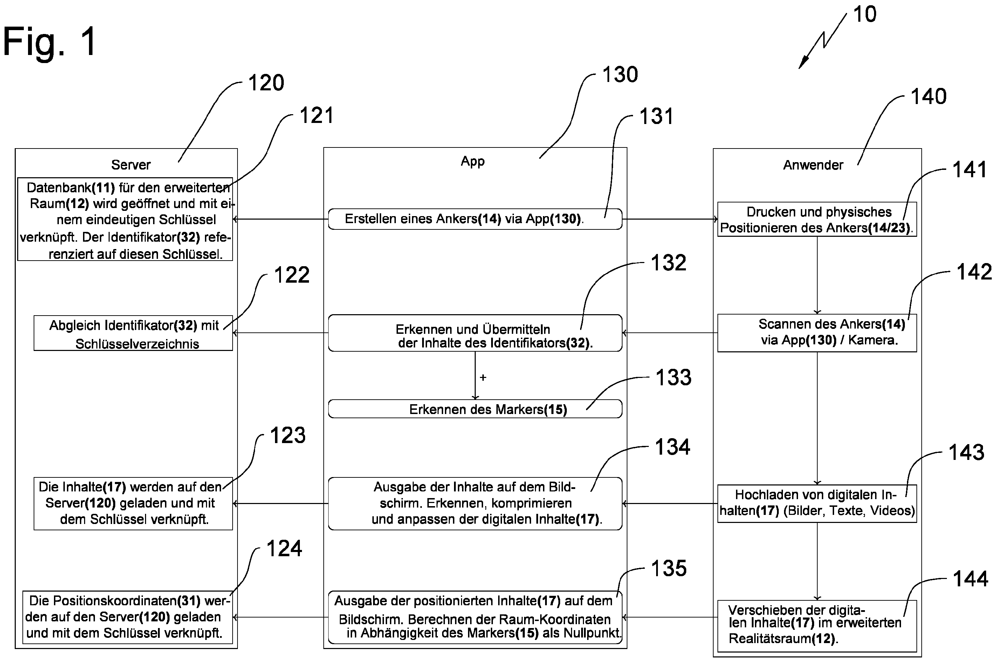

In Figur 1 werden durch ein Blockdiagramm die technischen Abläufe von der Erstellung eines Ankers 14 bis zur Positionierung eines digitalen Inhaltselements 17 dargestellt.

Das Blockdiagramm ist in drei Kategorien Server 120, App 130 und Anwender 140 aufgeteilt und jede Kategorie enthält wiederum verschiedene Operatoren (Funktionsblöcke), wobei die Kategorie angibt, wer oder was eine Operation ausführt.

Die Kategorie Server 120 enthält absteigend angeordnet insgesamt vier Operatoren, zum einen Operator 121 "Datenbank 11 für den erweiterten Realitätsraum 12 wird geöffnet und mit einem eindeutigen Schlüssel verknüpft. Der Identifikator 32 referenziert auf diesen Schlüssel", einen Operator 122 "Abgleich Identifikator 32 mit Schlüsselverzeichnis", einen Operator 123 "die Inhalte 17 werden auf den Server 120 geladen und mit dem Schlüssel verknüpft." und zuletzt einen Operator 124 "Die Positionskoordinaten 31 werden auf den Server 120 geladen und mit dem Schlüssel verknüpft."

In der Kategorie App 130 sind fünf Operatoren ebenfalls absteigend enthalten, ein Operator 131 "Erstellen eines Ankers 14 via App", ein Operator 132 "Erkennen und Übermitteln der Inhalte des Identifikators 32", ein Operator 133 "Erkennen des Markers 15", ein Operator 134 "Ausgabe der Inhalte 17 auf dem Bildschirm. Erkennen, Komprimieren und Anpassen der digitalen Inhalte 17." und ein Operator 135 "Ausgabe der positionierten Inhalte 17 auf dem Bildschirm. Berechnen der Raum-Koordinaten in Abhängigkeit des Markers 15 als Nullpunkt."

Zuletzt wird die Kategorie Anwender 140 gezeigt, wobei diese die vier Operatoren 141 "Drucken und physisches Positionieren des Ankers 14.", 142 "Scannen des Ankers 14 via App/Kamera.", 143 "Hochladen von digitalen Inhalten (Bilder, Texte, Videos)17" und 144 "Verschieben der digitalen Inhalte 17im erweiterten Realitätsraum 12" enthält und auch die nun genannten Operatoren sind absteigend in der genannte Kategorie angeordnet.

Die Operatoren sind untereinander mittels Pfeilen verbunden, wobei diese den Informationenfluss zwischen den vorher genannten Operatoren beschreiben und sogar die Richtung dessen angeben können.

Ausgehend von dem Operator 131 "Erstellen eines Ankers 14 via App." in der Kategorie App 130 wird der Operator 121 "Datenbank 11 für den Raum geöffnet und mit einem eindeutigen Schlüssel verknüpft. Der Identifikator 32 referenziert auf diesen Schlüssel" und der Operator 141 "Drucken und physikalisches Positionieren des Ankers 14.", wobei der letztgenannte Operator 141 von dem Anwender 140 ausgeführt wird. Dies entspricht den Schritten A) Erstellen einer Datenbank 11 zur Generierung eines erweiterten Realitätsraumes 12 mittels eines ersten Geräts 13, und B) Verknüpfung der Datenbank 11 mit einem individuellen, digitalen Anker 14, wobei der Anker 14 wenigstens einen Marker 15 aufweist, des in Anspruch 1 dargelegten Verfahrens 10.

Dabei ist unteranderem festzuhalten, dass die Datenbank 11 auch ein Koordinatensystem 29 enthält (nicht dargestellt), dessen Nullpunkt abhängig von dem mit der Datenbank 11 verknüpften Marker 15 und damit auch Anker 14 in der Realität ist. In dem genannten Anwendungsbeispiel des Verfahrens kann der Anker 14 auf einem Aufsteller 25 positioniert werden (nicht dargestellt).

Auch der nächste Operator 142 wird durch den Anwender 140 ausgeführt, indem dieser den Anker 14, beispielsweise mit einer Kamera eines Mobiltelefons, scannt und wodurch zwei weitere Prozesse angestoßen werden.

Zum einen wird der Operator 132 "Erkennen und Übermitteln der Inhalte des Identifikators 32." ausgelöst, wodurch der Operator 122 "Abgleich Identifikator 32 mit Schlüsselverzeichnis", was möglich ist, da in einem vorherigen Schritt ein Operator 121 den Schlüssel mit dem Identifikator 32 verknüpft hat, und der Operator 133 "Erkennen des Markers" gestartet werden. Infolgedessen kann die richtige Datenbank 11 der entsprechenden Anfrage zugeordnet werden. Der Identifikator 32 kann mit dem Marker 15 in einem grafischen Muster dargestellt oder separat als QR-Code 27 ausgeführt sein.

Zum anderen kann mittels des Operators 143 "Hochladen von digitalen Inhalten (Bilder, Texte, Videos)" durch den Anwender 140 begonnen werden, digitale Inhaltselemente 17 der App 130 bereit zu stellen, welche den Operator 134 "Ausgabe der Inhalte auf dem Bildschirm. Erkennen, Komprimieren und Anpassen der digitalen Inhalte." ausführt.

Die derart hochgeladenen digitalen Inhaltselemente 17 stellen die Erweiterung dar, mit der später die Darstellung der Realität überblendet wird. Entsprechend den Vorgaben des Anwenders 140 wird der digitale Inhalt 17 in der App 130 ausgehend vom Marker 15 einer Position zugeordnet und die Größe und Ausrichtung festgelegt. Die digitalen Inhalte können hierbei beispielsweise Bilder, Texte oder auch Videos umfassen.

Es wird durch den Operator 123 "die Inhalte werden auf den Server geladen und mit dem Schlüssel verknüpft" ausgeführt, wobei auch hierbei wieder die von einem der ersten Operatoren 121 erstellte Datenbank 11 auf dem Server 120 eine Rolle spielt, da diese mit dem Schlüssel verknüpft ist. Die Datenbank 11 ist nun mit dem Anker 14 verknüpft und mit dem digitalen Inhalt 17 gefüllt.

Der Operator 144 "Verschieben der digitalen Inhalte im erweiterten Realitätsraum" erfolgt nun durch den Anwender 140, was die Lokalisierung des Inhaltselementes 17entsprechend der Wünsche des Anwenders 140 in Bezug auf den Anker 14 zur Folge hat und über die App 130 mittels des Operators 135 "Ausgabe der positionierten Inhalte auf dem Bildschirm. Berechnen der Raum-Koordinaten in Abhängigkeit des Markers als Nullpunkt." umsetzt.

Der letzte Schritt findet mittels des Operators 136 "die Positionskoordinaten werden 31 auf den Server 120 geladen und mit dem Schlüssel verknüpft." statt.

Der erweiterte Realitätsraum 12 ist nun erstellt, mit einem Bezugspunkt in der realen Welt - dem Anker 14 - verknüpft und mit digitalem Inhalt 16, welcher im erweiterten Realitätsraum 12 positioniert wurde, versehen. Zusätzlich ist der Vorgang auf dem Server 120 hinterlegt, über welchen die Datenbank 11 auf verschiedenen Geräten 13 und / oder 19 abgerufen werden können (nicht dargestellt).

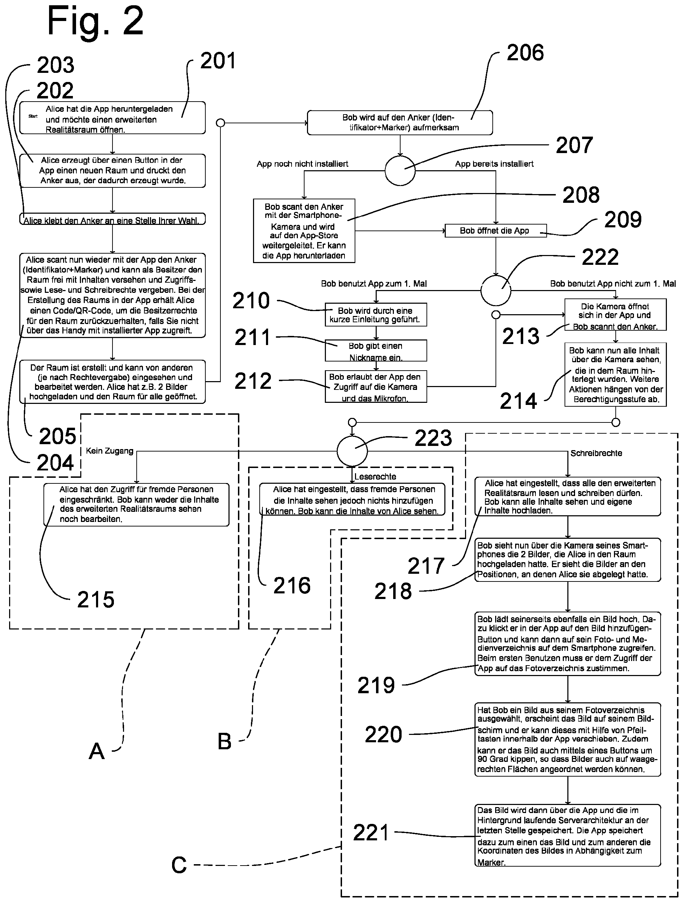

Die Figur 2 zeigt ein Flussdiagramm, welches das erfindungsgemäße Verfahren zur Erstellung und Interaktion mit dem erweiterten Realitätsraum 12 darstellt. Es ist Schritt für Schritt gezeigt, wie zwei Personen, Alice, stellvertretend für einen ersten Inhaltsübermittler 18, und Bob, stellvertretend für einen zweiten Inhaltsübermittler 21, das Verfahren 10 beispielhaft durchlaufen.

Das genannte Verfahren beginnt durch den Schritt 201, nämlich dass Alice die Software, im folgenden auch App 130 genannt, heruntergeladen hat und einen erweiterten Realitätsraum 12 öffnen möchte.

Im nächsten Schritt 202 erzeugt Alice über einen Button/Tastendruck in der App 130 einen neuen Raum und druckt den Anker 14 aus, der dadurch physisch erzeugt wurde.

Die App 130 erstellt dabei im Hintergrund die Datenbank 11, welche den Raum bzw. ein Koordinatensystem 29 enthält und verknüpft die Datenbank 11 mittels des Schlüssels mit dem Anker 14 und Alice kann den ausgedruckten Anker 14 an einer Stelle Ihrer Wahl positionieren.

Der Anker 14 kann in Schritt 203 beispielsweise an verschiedenen Orten aufgeklebt werden.

Ist dies abgeschlossen, scannt Alice in Schritt 204 mit der App 130 den Anker 14, welcher aus Identifikator 32 und Marker 15 besteht und kann als Besitzer den Raum frei mit Inhalten versehen und Zugriffs- sowie Lese- und Schreibrechte vergeben.

Bei der Erstellung des Raums in der App 130 erhält Alice einen Code/QR-Code 27, um die Besitzerrechte für den Raum zurückzuerhalten, falls Sie nicht über das Handy mit installierter App 130 zugreifen kann.

Nun ist der Raum in Schritt 205 erstellt und kann von anderen (je nach Rechtevergabe) eingesehen und bearbeitet werden. Alice hat z.B. zwei Bilder hochgeladen und den Raum für alle geöffnet.

Bob wird auf den von Alice positionierten Anker 14, welcher aus dem Identifikator 32 und dem Marker 15 besteht, aufmerksam, was beispielsweise auf einer Messe passieren kann, was dem Schritt 206 entspricht.

Das Flussdiagramm verzweigt sich an dieser Stelle 207 dahingehend, dass zwei Fälle möglich sind, wobei in Fall 1 208 die App 130 noch nicht auf dem Gerät von Bob installiert ist und in Fall 2 209 die App 130 doch bereits installiert auf dem Gerät von Bob vorhanden ist.

In dem genannten Fall 1 208 wird Bob daher zuerst die App 130 herunterladen müssen, indem Bob den Anker 14 mit der Smartphone-Kamera scannt und in einen App-Store weitergeleitet wird, wo er die App 130 herunterladen kann und diese automatisch auf seinem Gerät 19 installiert wird.

Der App-Store ist eine digitale Vertriebsplattform für Anwendungssoftware, in welche Kategorie auch die App 130 fällt. Der Dienst ermöglicht es Benutzern, Software für Mobilgeräte, wie Smartphones und Tablets, bei manchen Angeboten auch für andere Geräte, wie zum Beispiel Personal Computer, aus einem Katalog herauszusuchen und herunterzuladen.

Ist die App 130 auf dem jeweiligen Gerät 13 / 19 installiert, verlaufen Fall 1 208 und Fall 2 209 wieder gleich und die App 130 wird auf dem zweiten Gerät 19 durch Bob geöffnet.

Es schließt sich eine weitere Verzweigung 222 mit zwei Möglichkeiten an, wobei auch hier ein Fall A, bestehend aus den Schritten 210, 211 und 212 vorliegt, der die Situation beschreibt, dass Bob die App 130 zum ersten Mal startet und nun erst einmal einrichten muss, da er diese gerade erst installiert hat und ebenso ein Fall B vorhanden ist, in dem Bob die App 130 bereits vorher schon einmal gestartet hatte.

Im genannten Fall A wird Bob zuerst durch eine kurze Anleitung geführt, was dem Schritt 210 entspricht, erstellt einen Benutzeraccount mit einem Nickname (Benutzernamen), was dem Schritt 211 entspricht, und gibt der App 130 die benötigten Berechtigungen z.B. für den Standort, die Kamera und das Mikrofon, was dem Schritt 212 entspricht.

Ist dies abgeschlossen, laufen beide Fälle A und B dadurch zusammen, dass die Kamera sich in der App 130 öffnet und Bob den Anker 14 scannt, dies entspricht Schritt 213. Dabei muss das Sichtfeld der Kamera auf den Anker 14 gerichtet sein und dieses wird direkt auf dem Display des Gerätes, auf dem die App 130 läuft, angezeigt.

Bob kann nun alle Inhalte über die Kamera sehen, die in dem Raum hinterlegt wurden. Weitere Aktionen hängen von der Berechtigungsstufe ab, daher der Zugriff auf die Datenbank 11 ist berechtigungsabhängig, was Schritt 214 abbildet.

Durch die genannten Berechtigungsstufen, woraus unterschiedliche Zugriffsumfänge auf die Datenbank 11 entstehen, entwickeln sich in dem Flussdiagramm weitere Verzweigungen 223, welche mit I, II, III bezeichnet werden und welche in dem Flussdiagramm dargestellt sind.

Eine Verzweigung I drückt den Fall 215 aus, dass kein Zugang zur Datenbank 11 infolge einer nicht ausreichenden Berechtigungsstufe vorliegt. Alice hat den Zugriff für fremde Personen eingeschränkt. Bob kann weder die Inhalte des erweiterten Realitätsraums 12 sehen noch bearbeiten, da er als fremde Person gilt.

Eine weitere Verzweigung II zeigt auf, wie die Situation mit ausreichenden Leserechten verlaufen würde, was Schritt 216 entspricht. Dabei hat Alice eingestellt, dass fremde Personen die Inhalte sehen, jedoch nichts hinzufügen können. Bob kann die Inhalte von Alice daher nur sehen, jedoch nicht bearbeiten oder erweitern.

Die Verzweigung III resultiert daraus, dass Lese- und Schreibrechte vorhanden sind, wobei die Verzweigung drei aus den Schritten 217, 218, 219, 220 und 221 besteht. Dazu hat Alice eingestellt, dass alle den erweiterten Realitätsraum 12 lesen und beschreiben dürfen. Bob kann alle Inhalte sehen, diese bearbeiten und ergänzend eigene Inhalte hochladen, was dem ersten Schritt 217 entspricht.

Alice kann die Zugriffsrechte jederzeit ändern und somit öffnen oder beschränken.

Zusätzlich sieht Bob in Schritt 218 nun über die Kamera seines Smartphones die zwei Bilder, die Alice in den Raum hochgeladen hatte. Er sieht die Bilder an den Positionen, an denen Alice sie abgelegt hatte, da er auf die Datenbank 11 zugreifen kann und sich sein Gerät von dem Server aus der Datenbank 11 die benötigten Standortdaten des digitalen Inhaltes herunterlädt.

Bob lädt in Schritt 219 seinerseits ebenfalls ein Bild hoch. Dazu klickt er in der App 130 auf den Bild Hinzufügebutton, was eine grafische Betätigungsfläche auf dem Display darstellt, und kann dann auf seine Foto- und Medienverzeichnis auf dem Smartphone zugreifen. Beim ersten Benutzen muss er dem Zugriff der App 130 auf das Fotoverzeichnis zustimmen.

Hat Bob ein Bild oder anderen digitalen Inhalt 17, wobei in dem folgenden Beispiel weiterhin von einem Bild gesprochen wird, aus seinem Fotoverzeichnis oder Speicherort ausgewählt, erscheint das Bild auf seinem Bildschirm und er kann dieses mit Hilfe von Pfeiltasten innerhalb der App 130 verschieben und dessen Größe an die gewünschte Position anpassen. Zudem kann er das Bild auch mittels eines Buttons / Tastendrucks um 90 Grad kippen, so dass Bilder auch auf waagerechten Flächen angeordnet werden können, wobei dieser Vorgang dem Schritt 220 entspricht.

Das Bild wird dann über die App 130 und die im Hintergrund laufenden Serverarchitektur 120 an der letzten Stelle gespeichert. Die App 130 speichert dazu zum einen das Bild und zum anderen die Koordinaten des Bildes in Abhängigkeit zum Marker 15, was den Schritt 221 abbildet.

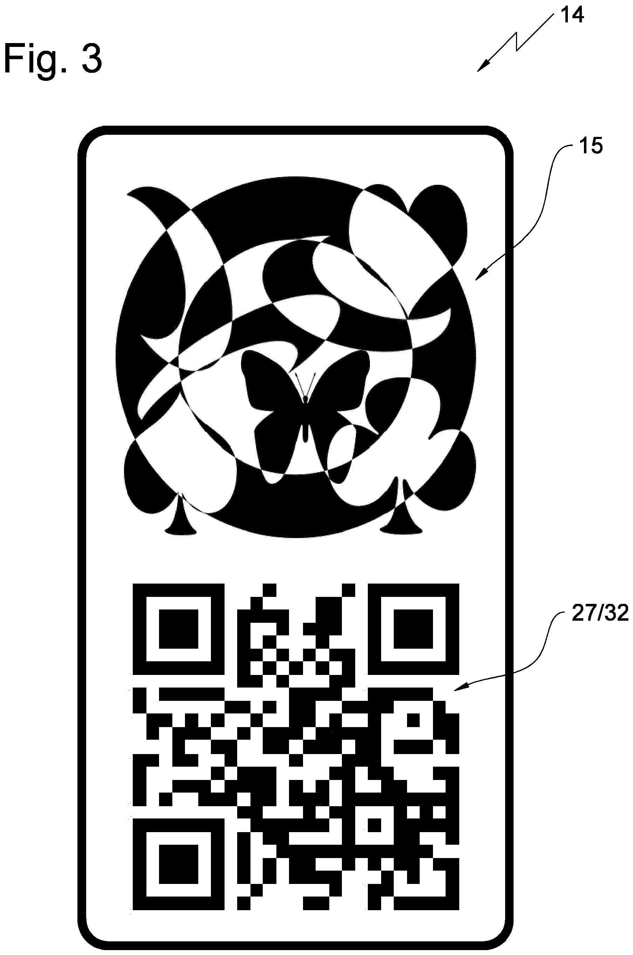

Die Figur 3 zeigt einen erfindungsgemäßen Anker 14, wobei dieser aus einem Marker 15 und einem QR-Code 27 besteht.

Der QR-Code 27 ist, wie in der Beschreibung der Figur 1 vorhergehend genannt, als Identifikator 32 einer spezifischen Datenbank 11 ausgelegt und ermöglicht es so, die angedachten digitalen Inhaltselemente17 in das Sichtfeld des Anwenders einzublenden bzw. auf dessen Display darzustellen. Eine Implementierung des Identifikators 32 mit dem Marker 15 in einem grafischen Muster ist möglich.

Der QR-Code 27 dient auch als Verlinkung zu einer Downloadmöglichkeit der App 130, wobei diese entweder durch einen Drittanbieter mittels eine App-Stores oder vom Entwickler selbst bereitgestellt werden kann oder vom Anbieter der App 130 bereitgestellt wird. Der QR-Code 27 ist optional und kann zur Verkleinerung des Ankers 14 auch weggelassen werden oder dessen Funktion in dem Marker 15 implementiert sein.

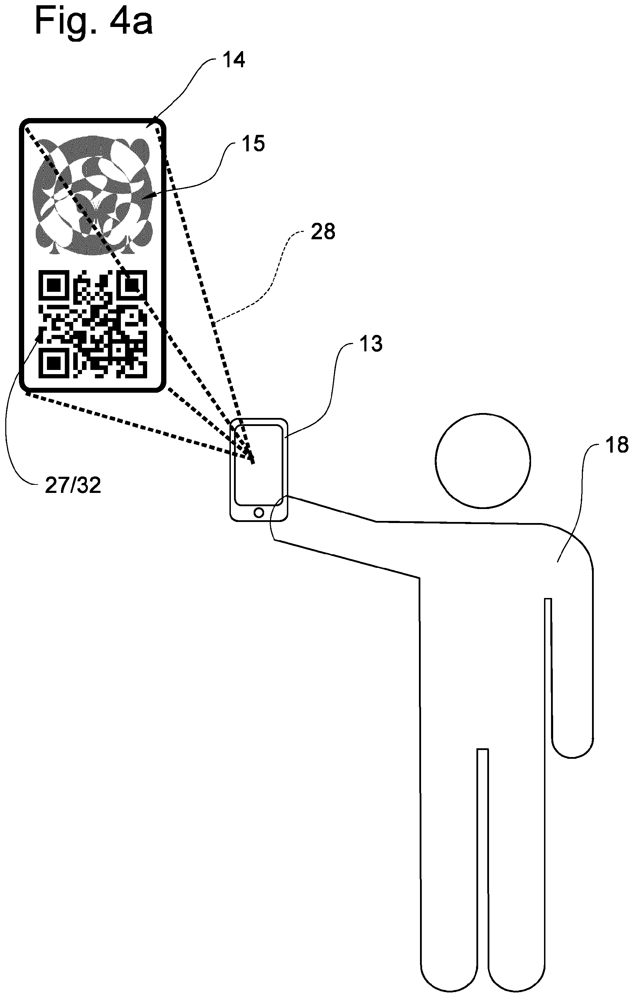

Die Figur 4a zeigt eine erste Person 1, stellvertretend für den ersten Inhaltsübermittler 18, wie diese mittels eines Smartphones 13 den vorher genannten Anker 14, insbesondere den QR-Code 27, einscannt. Dabei erfasst das Smartphone 13, genauer gesagt die Kamera, den Anker 14 und scannt den QR-Code 27. Sollte die App 130 noch nicht installiert sein, kann der QR-Code 27 einen möglichen Download der App 130 ermöglichen, indem der QR-Code 27 zu einer Downloadmöglichkeit referenziert ist, wobei auch eine Verknüpfung der Datenbank 11 mit dem QR-Code 27 möglich ist, sodass die Datenbank 11 auch ohne App 130 aufgerufen werden kann.

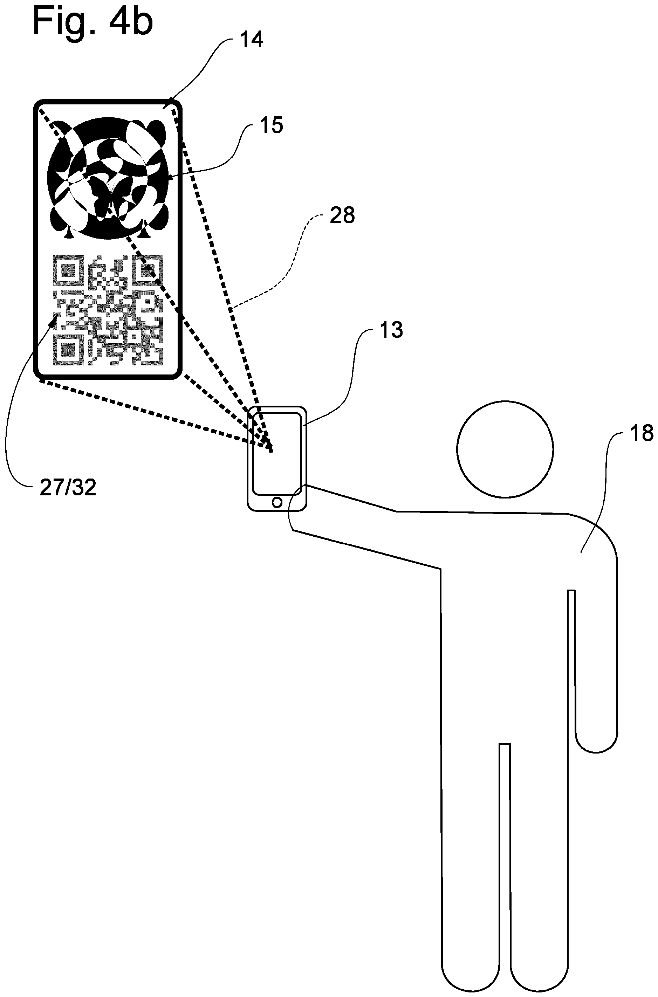

Anschließend, wie in Figur 4b dargestellt, wird der Marker 15 ebenfalls mittels eines Smartphones 13 gescannt, welcher zur Datenbank 11 referenziert.

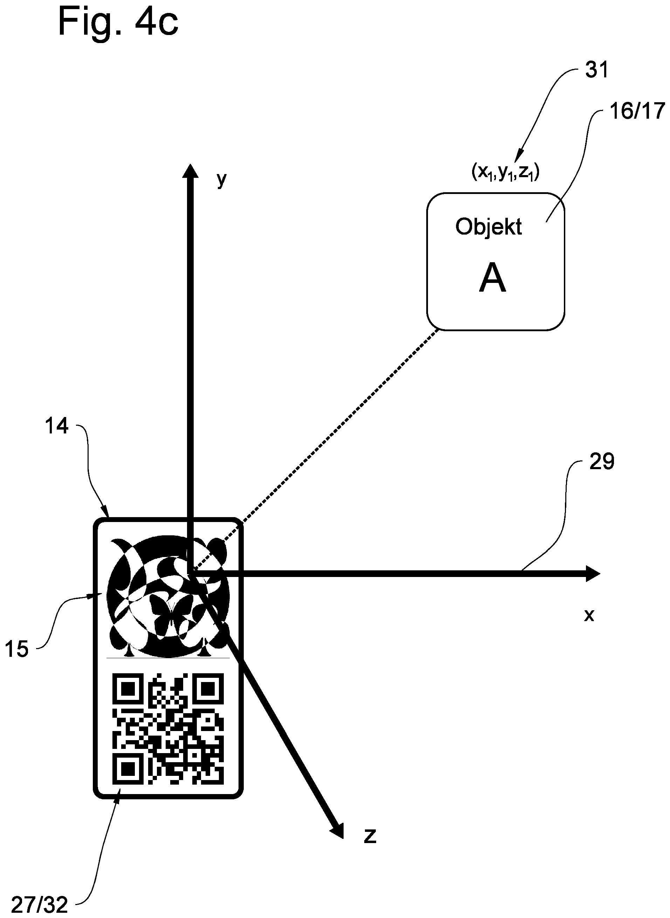

Die Verknüpfung von Marker 15 und einem erweiterten Realitätsraum 12 ist in der Figur 4c dargestellt. Die Erweiterung des Realitätsraumes ist als dreidimensionales Koordinatensystem 29 mit den Achsen x, y, z dargestellt, welches in den vorherigen Schritten in der Datenbank 11 generiert wurde. Das Objekt A (Inhaltselement 17), welches in der Figur 4c als Quadrat dargestellt ist, ist in dem Koordinatensystem 29 positioniert, da es sich an den Positionskoordinaten (x₁, y₁, z₁) 31 befindet und stellt den vordefinierten Inhaltsraum 16 dar, welcher in den folgenden Figuren gefüllt und im ganzen als Objekt A verschoben wird.

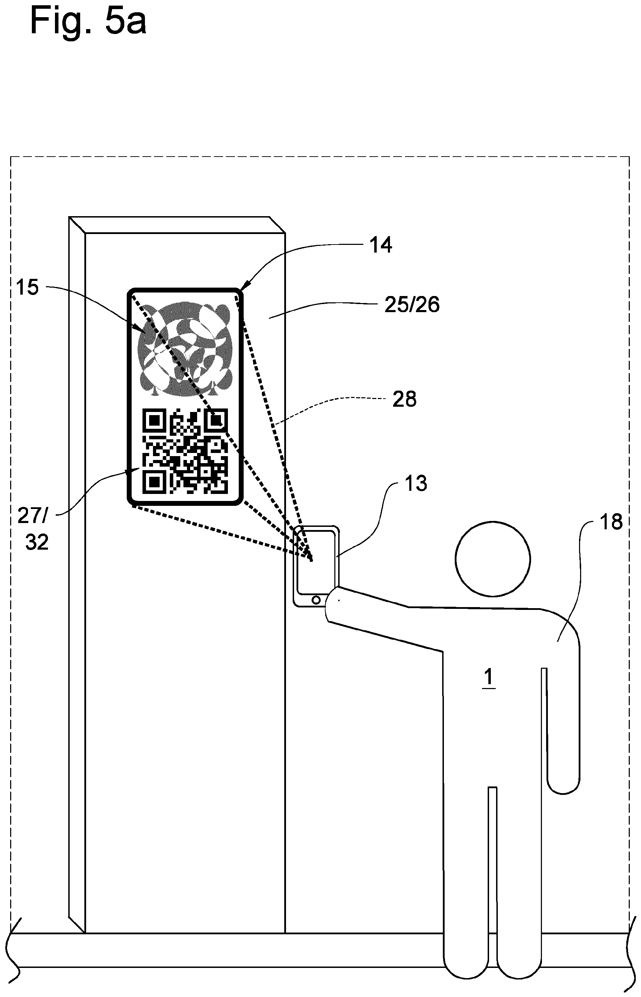

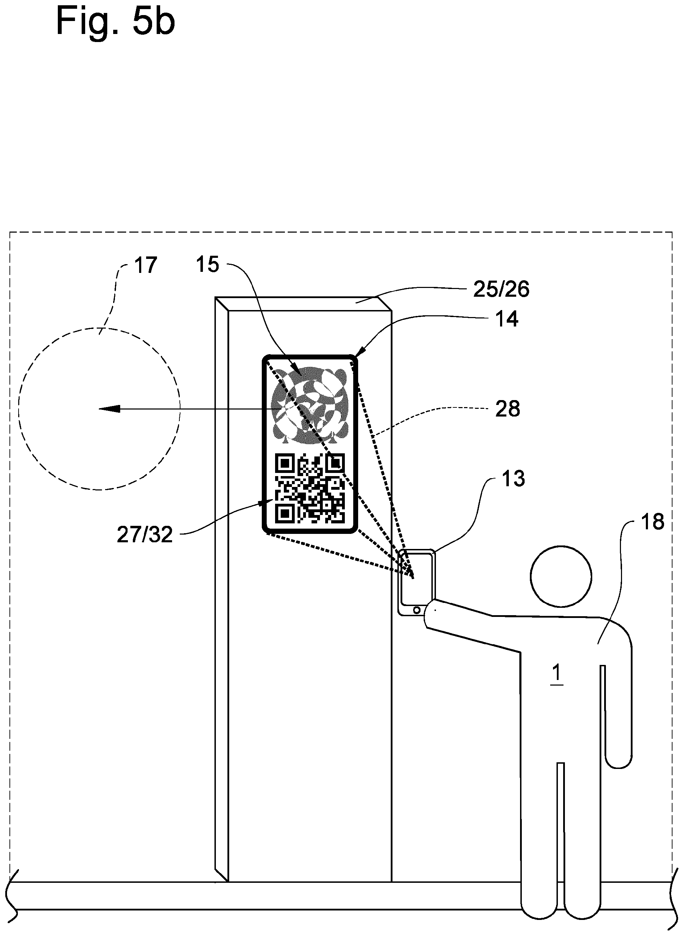

In der Figur 5a ist der Anker 14, bestehend aus Marker 15 und QR-Code 27 auf einem Aufsteller 25, welcher z.B. als Messeaufsteller 26 dienen kann, appliziert und wird von der ersten Person 1, dem ersten Inhaltsübermittler, 18 abgescannt und in der Figur 5b wird die Erweiterung des Realitätsraumes 21 mit einem Inhaltselement 17, hier beispielhaft mit einem runden gestrichelten Kreis, durch die erste Person 1, den ersten Inhaltsübermittler 18, gefüllt.

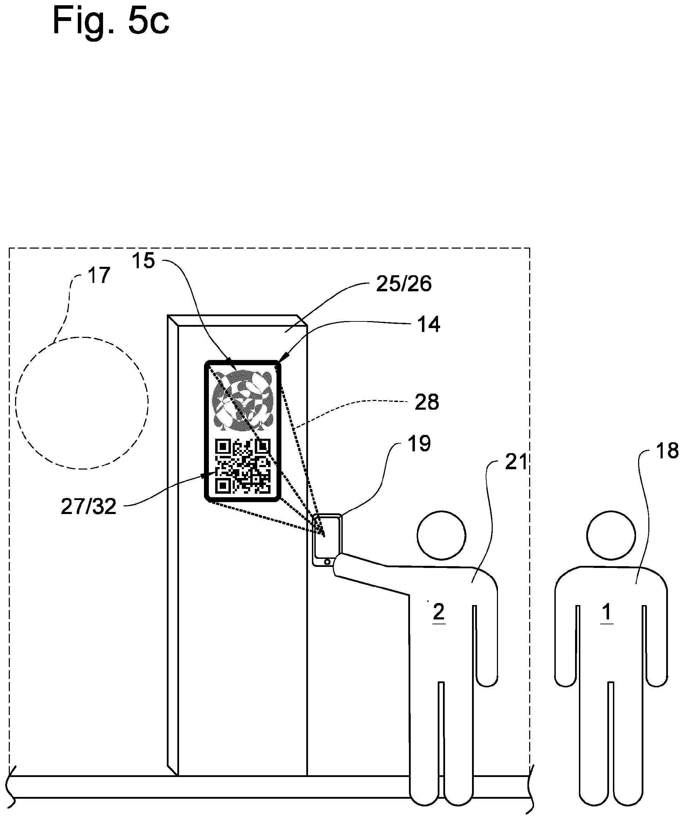

In der darauffolgenden Figur 5c erscheint eine zweite Person 2, der zweite Inhaltsübermittler 21 und scannt den Anker 14 mittels seines Smartphones 19, woraufhin ihm der Inhalt 17, den zuvor der erste Inhaltsübermittler 18 positioniert hatte, nämlich der runde gestrichelte Kreis, angezeigt wird.

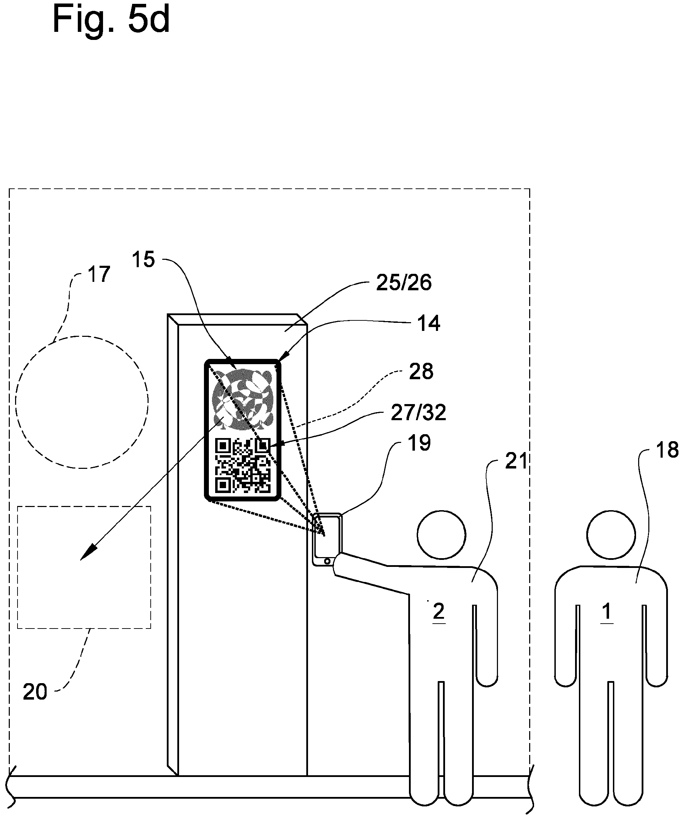

Ergänzend dazu kann die zweite Person 2, der Inhaltsübermittler 21, noch seine Inhaltselemente 20, hier stellvertretend dargestellt durch ein gestricheltes Viereck, hinzufügen, wie in der Figur 5d dargestellt.

### Bezugszeichenliste

10. erfindungsgemäßes Verfahren
11. Datenbank
12. erweiterter Realitätsraum
13. erstes Gerät
14. Anker
15. Marker
16. Inhaltsraum
17. Inhaltselement
18. Inhaltsübermittler
19. zweites Gerät
20. zweites Inhaltselement
21. zweiten Inhaltsübermittler
22. elektronische Apparatur
23. physischer Anker
24. LEDs
25. Aufsteller
26. Messeaufsteller
27. QR-Code
28. Sichtfeld der Kamera
29. Koordinatensystem
30. Rahmen
31. Positionskoordinaten
32. Identifikator
120. Server
121. Operator
122. Operator
123. Operator
124. Operator
130. App
131. Operator
132. Operator
133. Operator
134. Operator
135. Operator
140. Anwender
141. Operator
142. Operator
143. Operator
144. Operator
201. Schritt zur erweiterten Realitätsdarstellung
202. Schritt zur erweiterten Realitätsdarstellung
203. Schritt zur erweiterten Realitätsdarstellung
204. Schritt zur erweiterten Realitätsdarstellung
205. Schritt zur erweiterten Realitätsdarstellung
206. Schritt zur erweiterten Realitätsdarstellung
207. Entscheidung
208. Schritt zur erweiterten Realitätsdarstellung
209. Schritt zur erweiterten Realitätsdarstellung
210. Schritt zur erweiterten Realitätsdarstellung
211. Schritt zur erweiterten Realitätsdarstellung
212. Schritt zur erweiterten Realitätsdarstellung
213. Schritt zur erweiterten Realitätsdarstellung
214. Schritt zur erweiterten Realitätsdarstellung
215. Schritt zur erweiterten Realitätsdarstellung
216. Schritt zur erweiterten Realitätsdarstellung
217. Schritt zur erweiterten Realitätsdarstellung
218. Schritt zur erweiterten Realitätsdarstellung
219. Schritt zur erweiterten Realitätsdarstellung
220. Schritt zur erweiterten Realitätsdarstellung
221. Schritt zur erweiterten Realitätsdarstellung
222. Entscheidung
223. Entscheidung

## Patentansprüche

1. Verfahren (10) zur Nutzung eines erweiterten Realitätsraumes (12) mit den folgenden Schritten:
- A) Erstellen einer Datenbank (11) zur Generierung eines erweiterten Realitätsraumes (12) mittels eines ersten Geräts (13),
- B) Verknüpfung der Datenbank (11) mit einem individuellen, digitalen Anker (14), wobei der Anker (14) wenigstens einen Marker (15) und / oder einen Identifikator (32) aufweist,
- C) Einfügen und Positionierung von einem vordefinierten Inhaltsraum (16) in den erweiterten Realitätsraum (12),
- D) Befüllen des Inhaltsraumes (16) mit einem ersten Inhaltselement (17) durch wenigstens einen ersten Inhaltsübermittler (17).

2. Verfahren (10) nach Anspruch 1, **dadurch gekennzeichnet, dass** in einem Schritt E mittels des ersten Gerätes (13) und / oder eines zweiten Geräts (19) auf die Datenbank (11) zugegriffen wird.

3. Verfahren (10) nach Anspruch 2, **dadurch gekennzeichnet, dass** der Inhaltsraum (16) mit einem zweiten Inhaltselement (21) durch den ersten Inhaltsübermittler (18) mittels des ersten Gerätes (13) und / oder durch einen zweiten Inhaltsübermittler (21) mittels eines zweiten Geräts (19) befüllt wird.

4. Verfahren (10) nach Anspruch 3 **dadurch gekennzeichnet, dass** der erste Inhaltsübermittler (18) mittels des ersten Gerätes (13) das erste und / oder zweite Inhaltselement (17,20) lesen und / oder bearbeiten kann.

5. Verfahren (10) nach Anspruch 3, **dadurch gekennzeichnet, dass** der zweite Inhaltsübermittler (21) mittels des zweiten Gerätes (19) das erste und / oder das zweite Inhaltselement (17, 20) lesen und / oder bearbeiten kann.

6. Verfahren (10) nach einem der vorhergehenden Ansprüche, **dadurch gekennzeichnet, dass** das Lesen und / oder Befüllen und / oder Bearbeiten des Inhaltsraumes (16) und / oder des Inhaltselementes (17) (20) berechtigungsabhängig ist.

7. Verfahren (10) nach einem der vorhergehenden Ansprüche, **dadurch gekennzeichnet, dass** der Inhaltsraum (16) geräteunabhängig unter Verwendung der Positionierung des Inhaltsraumes (16) im erweiterten Realitätsraum (12) dargestellt wird.

8. Verfahren (10) nach einem der vorhergehenden Ansprüche, **dadurch gekennzeichnet, dass** der Anker (14) mittels elektronischer Apparatur abgescannt werden kann.

9. Verfahren (10) nach einem der vorhergehenden Ansprüche, **dadurch gekennzeichnet, dass** aus dem Anker (14) ein physischer Anker (23), insbesondere durch Druckverfahren oder Gravurverfahren, abgeleitet werden kann.

10. Physischer Anker (23), **dadurch gekennzeichnet, dass** dieser portabel, stabil und / oder wiedererkennbar ist.

11. Physischer Anker (23) nach Anspruch 10 **dadurch gekennzeichnet, dass** dieser aus einem Textil und / oder Papier besteht.

12. Physischer Anker (23) nach Anspruch 11, **dadurch gekennzeichnet, dass** der physische Anker (23) von einem Rahmen (30), insbesondere einem Aluminiumrahmen, wenigstens teilweise umgeben ist.

13. Physischer Anker (23) nach einem der Ansprüche 10 bis 12, welcher bedruckbar, wasserfest und / oder brandfest ist.

14. Physischer Anker (23) nach einem der Ansprüche 10 bis 13, **dadurch gekennzeichnet, dass** der physische Anker (23) hinterrücks mit LEDs verstehen ist.

15. Physischer Anker (23) nach einem der Ansprüche 10 bis 14, dadurch genkennzeichnet ist, dass der physische Anker (23) als Aufsteller (25), insbesondere als Messeaufsteller (26), ausgebildet ist.
